# EUROPÄISCHE PATENTANMELDUNG

(11) **EP 1 050 450 A2**
(43) Veröffentlichungstag der Anmeldung: **08.11.2000**
(21) Anmeldenummer: 00107803.9
(22) Anmeldetag: 12.04.2000
(51) Int. Cl.: B62D 49/06

(54) **Arbeitsfahrzeug**

(30) Priorität: 04.05.1999 DE 19920283
(71) Anmelder: Gallersdörfer, Peter, 92637 Weiden i.d. Opf. (DE)
(72) Erfinder: Gallersdörfer, Peter, 92637 Weiden i.d. Opf. (DE)
(74) Vertreter: Graf, Helmut, Dipl.-Ing.

(57) **Zusammenfassung**

Die Erfindung bezieht sich auf ein neuartiges Arbeitsfahrzeug, insbesondere landwirtschaftliches Arbeitsfahrzeug (1).

## Beschreibung

Die Erfindung bezieht sich auf ein Arbeitsfahrzeug gemäß Oberbegriff Patentanspruch 1.

Selbstfahrende Arbeitsfahrzeuge, insbesondere auch solche für die Landwirtschaft sind in unterschiedlichen Ausführungen bekannt.

Aufgabe der Erfindung ist es, ein Arbeitsfahrzeug aufzuzeigen, welches bei optimalen Fahrverhalten, insbesondere auch auf öffentlichen Straßen, bei einem möglichst großen Platz für das Arbeitsaufbau auf dem Fahrzeugrahmen und bei einer Fahrzeuglänge, die nicht über ein zulässiges Höchstmaß hinausgeht, die Anordnung von Arbeitsgeräten am Rahmen ermöglicht und dabei insbesondere auch das Parken von Arbeitsgeräten innerhalb der für ein Fahren auf öffentlichen Straßen und Wegen vorgeschriebenen maximalen Fahrzeugabmessungen erlaubt.

Zur Lösung dieser Aufgabe ist ein Arbeitsfahrzeug entsprechen dem Patentanspruch 1 ausgebildet.

Bei dem erfindungsgemäßen Arbeitsfahrzeug befindet sich der Fahrstand bzw. das Führerhaus auf einem Ausleger, der über die Vorderseite des Fahrzeugrahmens vorsteht, wobei unterhalb dieses Auslegers dann ein Raum geschaffen ist, der zur Unterbringung von Arbeitsgeräten, insbesondere auch zum Parken von Arbeitsgeräten oder deren Teilen im Nichtgebrauchszustand bedient.

Bei einer bevorzugten Ausführungsform befindet sich das jeweilige Arbeitsgerät im Verwendungsfall in Vorwärts-Fahrtrichtung des Arbeitsfahrzeuges hinter dem Fahrstand, womit die Sicht für den Fahrer wesentlich verbessert ist, insbesondere auch eine Sichtbehinderung durch das Arbeitsgerät oder durch von diesem in die Umgebung abgegebene Bestandteile besteht. Letzteres wirkt sich beispielsweise dann positiv aus, wenn das Arbeitsgerät ein Schneepflug ist und der durch den Schneepflug aufgewühlter Schnee die Sicht behindern könnte. Weiterhin verbessert die Anordnung des Fahrstandes auch die Einsicht bei Einmündungen und Kreuzungen usw.

Weiterbildungen der Erfindung sind Gegenstand der Unteransprüche.

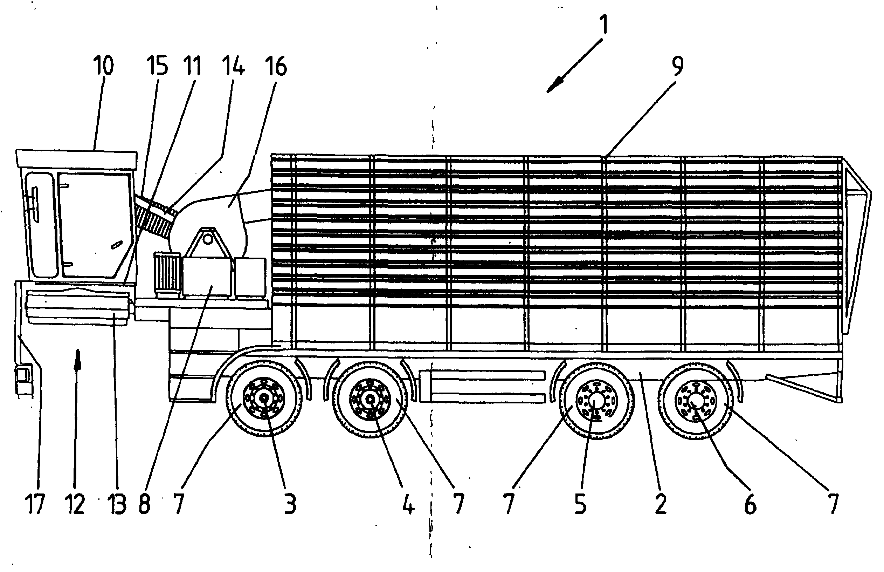

Die Erfindung wird im Folgenden anhand der Figur, die in vereinfachter Darstellung und in Seitenansicht ein Arbeitsfahrzeug gemäß der Erfindung zeigt, näher erläutert.

Bei dem in der Figur dargestellten und allgemein mit 1 bezeichneten Arbeitsfahrzeug handelt es sich um ein landwirtschaftliches Fahrzeug, welches zugleich auch als Straßenfahrzeug zugelassen ist. Im Einzelnen besteht das Arbeitsfahrzeug 1 aus einem Fahrzeugrahmen 2, an welchem insgesamt vier Achsen 3 - 6 mit jeweils wenigstens zwei Rädern 7 vorgesehen sind.

Wenigstens zwei Achsen, beispielsweise die beiden an der Fahrzeugvorderseite vorgesehenen Achsen 3 und 4 sind lenkbare Achsen. Weiterhin ist wenigstens eine Achse, beispielsweise aber sämtliche Achsen 3 - 6 durch einen Antrieb 8 angetrieben, der an der der Vorderseite des Fahrzeugs zugewandten Seite des Rahmens 2 vorgesehen ist.

Das Arbeitsfahrzeug 1 ist als Mähfahrzeug ausgebildet und besitzt dementsprechend auf dem Rahmen 2 einen Fahrzeugaufbau 9, der zur Aufnahme des Mähgutes (beispielsweise gemähtes Gras) dient und sich über den größeren Teil, d.h. über 5/6 oder 6/7 der Länge des Fahrzeugrahmens 2 erstreckt. Die Besonderheit des Fahrzeugs besteht darin, daß das Fahrerhaus 10, von dem aus die Steuerung und Lenkung des Arbeitsfahrzeugs 1 sowie auch die Steuerung von Funktionselementen und Arbeitsgeräten erfolgt, auf einem über die Vorderseite des Rahmens 2 wegstehenden Tragrahmen 11 angeordnet ist, und zwar derart, daß das Fahrerhaus 10 nicht nur in Vorwärtsfahrtrichtung (Pfeil A) des Fahrzeugs 1 den vorderen Achsen 3 und 4 vorauseilt, sondern unter dem Fahrerhaus 10 und vordem eigentlichen Rahmen 2 ein freier Raum 12 gebildet ist, in welchem unter den Fahrerhaus 10 verschiedene Arbeitsgeräte, die am Arbeitsfahrzeug 1 vorgesehen sind, im Nichtgebrauchszustand untergebracht bzw. geparkt werden können.

Bei der dargestellten Ausführungsform ist im Raum 12 ein Mähgerät 13 untergebracht, welches an einem gelenkigen Arm 14 vorgesehen ist, mit dem das Mähgerät 13 im Verwendungsfall aus dem Raum 12 seitlich herausgeschwenkt werden kann, und zwar an der in der Figur nicht sichtbaren anderen Längsseite des Fahrzeugs 1 derart, daß mit diesem Mähgerät 13 dann ein Mähen, beispielsweise eines Randstreifens, einer Böschung usw. seitlich von einer Fahrbahn möglich ist. Das Mähgut wird über einen flexiblen Kanal 15 und eine gebläseartige Fördereinrichtung 16 in den Aufbau 9 eingebracht. Die Fördereinrichtung 16 befindet sich dabei an der Vorderseite des Fahrzeugrahmens 2 zwischen dem Aufbau 9 und dem Fahrerhaus 10, also dort, wo auch der Antrieb 8 vorgesehen ist. In diesem Bereich ist beispielsweise auch der Arm 14 am Fahrzeug 1 bzw. am Rahmen 2 angelenkt.

Zur Vorderseite des Fahrzeugs 1 hin ist der Raum 12 durch eine schürzenartig nach unten gezogene Wand 17 begrenzt, an der u.a. auch die für das Fahren auf öffentlichen Straßen notwendigen Lampen (Scheinwerfer, Blinkleuchten usw.) vorgesehen sind.

Es versteht sich, daß im Raum 12 anstelle des Mähgerätes 13 oder zusätzlich zu diesem auch andere Funktionselemente untergebracht oder im Nichtgebrauchszustand geparkt werden können. Insbesondere ist es auch möglich, an der Vorderseite des Rahmens 2 Arbeitsgeräte vorzusehen, die zumindest im Arbeitszustand teilweise im Raum 12 aufgenommen sind, beispielsweise ein als Schneepflug dienendes Arbeitsgerät. Weiterhin ist es auch möglich, bei solchen Arbeitsgeräten, die im Verwendungsfall über die Längsseiten des Arbeitsfahrzeuges 1 vorstehen, derart auszubilden, daß sie für das Fahren des Arbeitsfahrzeugs 1 auf öffentlichen Straßen mit ihren seitlich überstehenden Bereichen in den Raum 12 eingezogen bzw. eingeschwenkt werden können usw.

Das Arbeitsfahrzeug 1 hat somit u.a. den Vorteil, daß bei einer reduzierten Gesamtlänge viel Platz am Rahmen 2 zur Aufnahme des jeweiligen Aufbaus 9 zur Verfügung steht und dennoch nicht benötigte oder beim Fahren auf öffentlichen Straßen eingezogene Arbeitsgeräte innerhalb der lichten zulässigen Abmessungen des Fahrzeugs aufgenommen werden können. Ein weiterer Vorteil besteht darin, daß durch die Anordnung des Fahrerhauses 10 weit vor dem Rahmen 2 bzw. den lenkbaren Achsen 3 und 4 für den Fahrer eine besonders gute Sicht besteht.

## Patentansprüche

1. Arbeitsfahrzeug, insbesondere landwirtschaftliches Arbeitsfahrzeug mit einem Fahrzeugrahmen (2), mit mehreren am Fahrzeugrahmen vorgesehenen Achsen (3 - 6), von denen jede wenigstens zwei Räder (7) aufweist, von denen wenigstens eine Achse (3 - 6) durch einen am Rahmen (2) vorgesehenen Antrieb (8) angetrieben und wenigstens eine Achsen (3 - 6) steuerbar ist, sowie mit einem Fahrstand (10) zum Steuern des Fahrzeugs, des Fahrzeugantriebs (8) und weiterer Funktionselemente des Fahrzeugs, sowie mit einem Raum zur Anordnung von Arbeitsgeräten (13) am Fahrzeug, **dadurch gekennzeichnet**, daß der Raum (12) zur Anordnung des wenigstens einen Arbeitsgerätes (13) unter dem Fahrstand (10) und in Fahrrichtung des Fahrzeugs vor der ersten Radachse (3) vorgesehen ist.

2. Fahrzeug nach Anspruch 1, dadurch gekennzeichnet, daß der Fahrstand ein Fahrerhaus (10) ist.

3. Arbeitsfahrzeug nach Anspruch 1 oder 2, dadurch gekennzeichnet, daß der Fahrstand (10) an einem über eine Vorderseite des Fahrzeugrahmens (2) vorstehenden Ausleger oder Tragrahmen (11) vorgesehen ist.

4. Arbeitsfahrzeug nach einem der vorhergehenden Ansprüche, dadurch gekennzeichnet, daß am Fahrzeugrahmen (2) ein Fahrzeugaufbau (9) vorzugsweise austauschbar vorgesehen ist, der sich über den weitaus größeren Teil der Länge des Fahrzeugrahmens (2) erstreckt.

5. Arbeitsfahrzeug nach einem der vorhergehenden Ansprüche, dadurch gekennzeichnet, daß an der Vorderseite des Rahmens (2) zwischen dem Fahrzeugaufbau (9) und dem Fahrstand (10) der Fahrzeugantrieb (8) und/oder Antriebe für Arbeitsgeräte (13) des Arbeitsfahrzeugs vorgesehen ist.

6. Arbeitsfahrzeug nach einem der vorhergehenden Ansprüche, dadurch gekennzeichnet, daß der Raum (12) unter dem Fahrstand (10) zum Parken wenigstens eines Arbeitsgerätes (13) oder von Teilen wenigstens eines Arbeitsgerätes im Nichtgebrauchszustand dient.

7. Arbeitsfahrzeug nach einem der vorhergehenden Ansprüche, gekennzeichnet durch seine Ausbildung als Mähfahrzeug, wobei das Arbeitsgerät ein Mähgerät (13) ist und der Aufbau (9) zur Aufnahme des Mähgutes dient.

8. Arbeitsfahrzeug nach Anspruch 7, dadurch gekennzeichnet, daß das Mähgerät (13) an einem schwenkbaren Arm (14) vorgesehen ist.

9. Arbeitsfahrzeug nach einem der vorhergehenden Ansprüche, dadurch gekennzeichnet, daß am Rahmen mehr als zwei Radachsen (3 - 6), beispielsweise wenigstens vier Radachsen vorgesehen sind, von denen zwei im vorderen Bereich des Rahmens (2) und zwei im hinteren Bereich des Rahmens (2) angeordnet sind.

10. Arbeitsfahrzeug nach einem der vorhergehenden Ansprüche, dadurch gekennzeichnet, daß zumindest die wenigstens eine vordere Radachse lenkbar ist.
